# EUROPÄISCHE PATENTSCHRIFT

(11) **EP 3 763 533 B1**
(45) Veröffentlichungstag und Bekanntmachung des Hinweises auf die Patenterteilung: **27.09.2023**
(21) Anmeldenummer: 19185420.7
(22) Anmeldetag: 10.07.2019
(51) Int. Cl.: B41J 3/407, B41J 15/08, B29C 48/00, B41J 2/17, B41J 11/00, B41J 25/00, A47B 96/20, B05D 3/06, B27D 5/00, B27N 7/00, B29C 48/16

(54) **VORRICHTUNG UND VERFAHREN ZUM BEDRUCKEN VON KANTENBÄNDERN**
DEVICE AND METHOD FOR PRINTING EDGE STRIPS
DISPOSITIF ET PROCÉDÉ D'IMPRESSION DE BANDES DE BORD

(43) Veröffentlichungstag der Anmeldung: 13.01.2021
(73) Patentinhaber: Fritz Egger GmbH & Co. OG, 6380 St. Johann in Tirol (AT)
(72) Erfinder: Fischer, Klaus, 57319 Bad Berleburg (DE)
(74) Vertreter: Cohausz & Florack

(56) Entgegenhaltungen:
- WO-A1-2019/070008
- JP-A- 2009 292 128
- US-A1- 2008 174 649
- US-A1- 2013 258 014
- US-A1- 2014 340 442

## Beschreibung

Die Erfindung betrifft eine Vorrichtung zum Bedrucken von Kantenbändern, mit mindestens einem Druckkopf zum Erzeugen eines Druckbildes auf dem Kantenband, mit einem Linearantrieb zum Bewegen des mindestens einen Druckkopfes in einer Druckrichtung innerhalb eines Druckbereichs zwischen zwei Endpositionen, mit einer Zuführeinrichtung zum Zuführen eines Kantenbands in den Druckbereich entlang einer Transportrichtung und mit einer Steuereinrichtung zum Steuern des mindestens einen Druckkopfes, des Linearantriebes und der Zuführeinrichtung. Die Erfindung betrifft auch ein dementsprechendes Verfahren zum Bedrucken von Kantenbändern.

Kantenbänder werden zunehmend in der industriellen Produktion von Möbel- oder Küchenplatten eingesetzt. Da die maschinelle Verarbeitung immer präziser durchgeführt werden kann, werden auch an die Kantenbänder selbst höhere Anforderungen nicht nur hinsichtlich der Verarbeitungseigenschaften, sondern auch hinsichtlich der optischen Eigenschaften gestellt.

Aus der DE 10 2015 118 055 A1 ist ein Verfahren bekannt, ein Kantenband durch eine Koextrusion derart herzustellen, dass neben dem Grundkörper auch bereits ein Dekorgrund ausgebildet ist, der durch einen weiteren Druckvorgang mit dem endgültigen Dekor versehen wird. Die Druckvorrichtung ist in dem Inline-Herstellungsprozess integriert und weist eine Mehrzahl von Druckköpfen, beispielsweise bis zu zehn Druckköpfe, für verschiedene Farben auf. Da die Druckköpfe stationär angeordnet sind und das zu bedruckende Kantenband kontinuierlich unter den Druckköpfen hindurch bewegt wird, wird auch der Druckprozess kontinuierlich durchgeführt.

Aus der DE 10 2008 010 738 A1 ist ein Herstellungsprozess bekannt, bei dem auf ein durch Extrusion hergestelltes Vorprodukt zunächst in einem ersten Schritt ein Dekorgrund aufgedruckt wird, um anschließend das Dekor mittels Digitaldruck zu vervollständigen.

Weil die Druckfarben nacheinander in einem Durchlauf des zu bedruckenden Kantenbandes aufgebracht werden, wird diese Technik auch als Single-Pass-Druck bezeichnet.

Aus der JP 2009 292128 A ist eine Vorrichtung mit einer Druckeinheit und einer Gebläseeinheit zum Bedrucken von Papier, Kunstdruckpapier, Filmen oder dergleichen bekannt, wobei während des Druckvorgangs das Druckmedium mittels eines Unterdrucks auf einer Druckplatte fixiert wird. Im Anschluss trocknet die Gebläseeinheit die aufgebrachte Farbe.

Die US 2014/0340442 A1 zeigt eine Vorrichtung zum Bedrucken von als Rollenwaren bereitgestelltem Papier mit einer Fördereinrichtung, einem Stützteil, einer Saugeinrichtung, einem Aufzeichnungsteil, einem Heizteil und einer Steuerung, wobei die Steuerung so konfiguriert ist, dass sie die Saugeinrichtung derart ansteuert, dass das zu bedruckende Papier während des Bedruckens durch den Aufzeichnungsteil mittels Saugkraft am Stützteil gehalten wird.

Die US2013/0258014 A1 offenbart eine Vorrichtung zum Bedrucken von papier- oder filmbasierten Medien mit einer Fördereinheit, welche das zu bedruckende Medium entlang eines Transportweges intermittierend zu einer Trägereinheit führt, auf welcher das Medium während des Bedruckens, welches durch eine Aufzeichnungseinheit vorgenommen wird, mittels einer Saugeinheit in Position gehalten wird.

Diese Herstellungsprozesse können in Single-Pass-Anlagen für Kantenbänder mit Breiten von bis zu 700 mm durchgeführt werden, wobei wahlweise jeweils ein Kantenband oder eine Mehrzahl nachträglich zu trennende Kantenbänder hergestellt werden. Jedoch haben sich bei der Anwendung dieser Single-Pass-Anlage verschiedene Probleme herausgestellt.

Für jede der aufzubringenden Farben sind über die Breite des zu bedruckenden Kantenbands mehrere stationäre Druckköpfe notwendig, Wegen der stationären Anordnung der Druckköpfe entsteht beim Drucken ein Sprühnebel, der die Druckqualität beeinträchtigen kann. Eine statische Aufladung des Kantenbandes verstärkt dabei den Effekt, so dass der entstehende Sprühnebel oberhalb des Kantenbandes verbleibt. Daher sind zusätzliche Maßnahmen wie ein Erzeugen einer zusätzlichen Luftströmung notwendig. Auch werden zusätzliche Absaugeinrichtungen direkt nach dem Drucken jeder einzelnen Farbe direkt im Anschluss an den jeweiligen Druckkopf oberhalb des zu bedruckenden Kantenbandes notwendig. Zudem führt der Sprühnebel unter Umständen dazu, dass sich an Flächen der Druckvorrichtung Tropfen niederschlagen, die dann auf das zu bedruckende Substrat fallen und dieses damit beschädigen.

Da die verschiedenen Farben aufgrund des räumlichen Abstandes zwischen den einzelnen Druckköpfen zeitlich versetzt nacheinander aufgetragen werden, ist es erforderlich, die jeweiligen Farbaufträge vor dem Bedrucken mit dem nächsten Druckkopf zu fixieren. Dazu sind zwischen den Druckköpfen LED's, sogenannte Pinnings (Fixierleuchtdioden), oder UV-Lichtquellen vorgesehen, deren Strahlung die jeweils frisch gedruckten Tintentropfen auf dem Kantenband nach jedem Farbauftrag zumindest teilweise aushärtet. Da die LED's bzw. die UV-Lichtquellen nahe an den benachbarten Druckköpfen angeordnet sind, kommt es zudem zu Wechselwirkungen und damit Beeinträchtigungen des Druckvorgangs. Die sogenannte Streustrahlung der LED oder UV - Lichtquellen beeinflussen daher negativ die Einsatzfähigkeit der unmittelbar positionierten Druckköpfe derart, dass deren Düsen durch ungewollte Aushärtung der Tinte verstopfen. Aufwändige Strahlungsabschirmungen zwischen den einzelnen Druckköpfen und entsprechende Abschirmungen sind daher technisch notwendig.

Werden Kantenbänder beispielsweise mittels einer strukturierten Kalanderwalze mit einer Porenstruktur erzeugt, die mit dem Dekor zusammenfallen soll, also eine sogenannte Synchronpore, dann ist eine sehr genaue Synchronisierung des Druckbildes mit der Oberflächenstruktur erforderlich. Durch das kontinuierlich unter den Druckköpfen durchlaufende Kantenband entstehen dabei hohe Anforderungen an den Prozess der Synchronisierung.

Ein weiterer Nachteil liegt in der stationären Anordnung der Druckköpfe, die nur eingeschränkt zugänglich sind und daher bei Wartung und Austausch einen erheblichen technischen Aufwand hervorrufen. Letztlich stellen auch die Kosten der Bedruckungsanlage einen Nachteil dar, da keine industriellen Standarddrucker die nach dem Multi-Pass Verfahren arbeiten, eingesetzt werden können.

Daher liegt der vorliegenden Erfindung das technische Problem zugrunde, das Bedrucken von Kantenbändern technisch und wirtschaftlich zu verbessern.

Das zuvor aufgeführte technische Problem wird erfindungsgemäß durch eine Verwendung einer Vorrichtung zum Bedrucken von Kantenbändern und somit zum Erzeugen eines Dekors auf dem Kantenband gelöst mit mindestens einem Druckkopf zum Erzeugen eines Druckbildes auf dem Kantenband, mit einem Linearantrieb zum Bewegen des mindestens einen Druckkopfes in einer Druckrichtung innerhalb eines Druckbereichs zwischen zwei Endpositionen, mit einer Zuführeinrichtung zum Zuführen eines Kantenbands in den Druckbereich entlang einer Transportrichtung und mit einer Steuereinrichtung zum Steuern des mindestens einen Druckkopfes, des Linearantriebes und der Zuführeinrichtung, die dadurch gekennzeichnet ist, dass die Transportrichtung des Kantenbands im Wesentlichen parallel zur Druckrichtung ausgerichtet ist.

Das erwähnte technische Problem wird auch durch ein Verfahren zum Bedrucken von Kantenbändern gelöst, bei dem mit mindestens einem Druckkopf ein Druckbild auf dem Kantenband erzeugt wird, bei dem mit einem Linearantrieb der mindestens eine Druckkopf in einer Druckrichtung innerhalb eines Druckbereichs zwischen zwei Endpositionen bewegt wird, bei dem mit einer Zuführeinrichtung das Kantenband in den Druckbereich entlang einer Transportrichtung zugeführt wird und bei dem mit einer Steuereinrichtung der mindestens eine Druckkopfes, der Linearantrieb und die Zuführeinrichtung gesteuert werden, bei dem der mindestens eine Druckkopf in einer Druckrichtung innerhalb eines Druckbereichs zwischen zwei Endpositionen bewegt wird, bei dem ein Kantenband in den Druckbereich entlang einer Transportrichtung zugeführt wird und bei dem das Kantenband im Wesentlichen parallel zur Druckrichtung transportiert wird.

Die Erfindung betrifft das Bedrucken von Kantenbändern. Unter Kantenbändern werden solche verstanden, die im Möbelbau und in Wohnungseinrichtungen und Innenausbau verwendet werden. Diese können Abschlusskanten insbesondere in Küchen, Sockelleisten, Übergangsleisten oder auch Lamellen von Rollläden oder Vorhängen sein. Die zu bedruckenden Kantenbänder können dabei aus thermoplastischen Kunststoffen bestehen, bevorzugt aus ABS, PVC, PP, PE, PET oder aus ähnlichen Kunststoffen hergestellt sein. In einer besonderen Ausgestaltungsform sind auch Materialen aus Papier und aus Papier/Kunststoff - Kombinationen möglich.

Wenn die Erfindung im Folgenden beispielhaft anhand von Kantenbändern beschrieben wird, so wird dieses nicht beschränkend verstanden.

Der Ausdruck "im Wesentlichen parallel" bedeutet, dass grundsätzlich die Transportrichtung und die Druckrichtung zusammenfallen, dass aber bei der Bewegung des mindestens einen Druckkopfes kleine Abweichungen von der Parallelität auftreten können.

Erfindungsgemäß wurde daher erkannt, dass die Effektivität des Bedruckens des Kantenbandes dadurch verbessert wird, wenn der gesamte Hub einer Hin- oder Her-Bewegung des mindestens Druckkopfes von industriellen Multi-Pass-Digitaldruckern ausgenutzt wird, ohne dass jede einzelne Hin- und Her-Bewegung des mindestens einen Druckkopfes durch die Breite des zugeführten Kantenbandes begrenzt ist. Somit wird der gesamte Hub des mindestens einen Druckkopfes für das Aufbringen des Digitaldruckes ausgenutzt.

Da der gesamte Hub einer industriellen Multi-Pass Digitaldruckvorrichtung im Bereich von bis zu 5200 mm, bevorzugt 2600 mm beträgt, wird der mindestens eine Druckkopf über eine ausreichend lange Strecke verfahren, so dass entstehender Sprühnebel sich nicht im Bereich des sich bewegenden Druckkopfes ansammeln kann.

Des Weiteren hat der Einsatz einer beschriebenen Druckvorrichtung mit beweglichem Druckkopf für ein Multi-Pass-Drucken den Vorteil, dass der mindestens eine Druckkopf in seiner Ruheposition leicht zugänglich ist und eine Wartung des Druckkopfes somit erleichtert wird. Zudem besteht ein Kostenvorteil darin, eine industrielle Druckvorrichtung einzusetzen und nicht auf eine Sonderkonstruktion angewiesen zu sein.

Grundsätzlich ist es möglich, eine Bewegung des Kantenbandes in Transportrichtung und eine Bewegung des mindestens einen Druckkopfes in Druckrichtung zu überlagern und somit das Bedrucken zu optimieren. Jedoch ist es bevorzugt, dass die Steuereinrichtung eingerichtet ist, mittels der Zuführeinrichtung das Kantenband im Taktmodus in den Druckbereich zuzuführen und zu positionieren und dass die Steuereinrichtung eingerichtet ist, mittels des Linearantriebs den mindestens einen Druckkopf zu bewegen und für einen Druckvorgang zum Bedrucken des Kantenbands anzusteuern. Insbesondere nachdem das Kantenband positioniert worden ist wird der mindestens eine Druckkopf bewegt. Ebenso ist eine lineare Bewegung des mindestens einen Druckkopfes gleichzeitig mit dem Transportieren des Kantenbandes möglich.

Das entsprechende Verfahren kann dabei ausgeführt werden, indem das Kantenband im Taktmodus in den Druckbereich zugeführt und positioniert wird und bei dem der mindestens eine Druckkopf bewegt und für einen Druckvorgang zum Bedrucken des Kantenbands angesteuert wird.

Der Begriff "eingerichtet sein" ist dabei so zu verstehen, dass die Steuereinrichtung sämtliche für eine Steuerung des mindestens einen Druckkopfes, des Linearantriebs und der Zuführeinrichtung notwendigen elektronischen Mikrochips, Speicher sowie Wandler aufweist, um Messsignale wie Positionssignale sowie Druckparameter aufzunehmen und Steuersignale zu erzeugen. Die Steuereinrichtung kann also aus einer Mehrzahl von Komponenten bestehen, die an gleichen oder unterschiedlichen Stellen der Vorrichtung angeordnet sind.

Des Weiteren bedeutet der Begriff "positionieren", das Kantenband relativ zur Vorrichtung exakt anzuordnen und beispielsweise für den Zeitraum des Druckvorgangs zu fixieren.

Somit wird das Kantenband in Ruhe gehalten, während der Druckvorgang des Multi-Pass-Druckens erfolgt. Nach Beendigung des Druckvorgangs wird das Kantenband durch die Zuführeinrichtung um eine vorgegebene Strecke weiter geführt und erneut positioniert, um ein nahtloses Bedrucken des Kantenbandes fortzusetzen.

In bevorzugter Weise ist vorgesehen, dass eine Saugtischfunktion zum Positionieren des Kantenbands zumindest abschnittsweise im Druckbereich integriert ist. Dadurch wird bei Erreichen der vorgegebenen Position das Kantenband während des folgenden Druckvorgangs noch besser fixiert.

Der Einsatz der Zuführeinrichtung beim Positionieren des Kantenbandes, also des Fixierens des Kantenbandes während des Druckvorgangs, führt dazu, dass bei einem Drucken einer Synchronpore, also eines Druckbildes synchron zu einer bereits in das Kantenband eingebrachten Oberflächenstruktur, die Genauigkeit verbessert wird. Denn die Führung des mindestens einen Druckkopfes relativ zum ruhenden Kantenband kann viel genauer eingestellt werden, als es bei einer Single-Pass-Druckvorrichtung mit stehenden Druckköpfen und laufendem Kantenband der Fall ist, so dass eine verbesserte synchrone Übereinstimmung mit einer Oberflächenstruktur erreicht wird.

In weiter bevorzugter Weise ist die beschriebene Vorrichtung dadurch gekennzeichnet, dass zumindest auf einer Seite, bevorzugt auf beiden Seiten des mindestens einen Druckkopfes in Druckrichtung mindestens Aushärtungsquelle, vorzugsweise eine Strahlungsquelle, insbesondere eine LED und - oder UV-Lichtquelle, oder vorzugsweise einer Warmluftquelle zum Aushärten der Druckfarbe vorgesehen ist.

Das Verfahren kann also bevorzugt dadurch ergänzt werden, dass die Druckfarbe während des Druckvorgangs in Druckrichtung hinter dem Aufdrucken, insbesondere mittels LED - oder UV-Licht ausgehärtet wird.

Werden wässrig pigmentierte Tinten verwendet, so kann eine Fixierung der Tintentröpfchen auch durch ein Erwärmen des Kantenbandes erreicht werden. Das zu bedruckende Kantenband verfügt dann über eine Tinten aufnahmefähige Oberflächengeometrie, z. B. eine Papieroberfläche oder ein mittels Plasma - Behandlung vorbehandelte Profiloberfläche. Dabei werden zum Beispiel beheizte Führungsbereiche oder Transportwalzen verwendet, die das zu bedruckende Substrat erwärmen, um die Trocknung gezielt zu unterstützen und sie regelbar zu gestalten.

Das Aushärten der aufgebrachten Druckfarbe hat den Vorteil, dass das bereits aus mehreren, beispielsweise vier Farben (CYMK) bestehende Druckbild fixiert wird und vor dem Auftragen mindestens einer weiteren Farbe, also in einem bidirektionalen Multi-Pass-Verfahren, nicht oder nur in geringem Maße verlaufen kann. Zudem kommt es wegen des zeitlichen Abstandes zwischen dem Aushärten und dem Aufdrucken der mindestens einen weiteren Farbe zu keiner gegenseitigen Beeinflussung von Strahlung und Druckkopf.

Nach Aushärten des gesamten Druckbildes kann dieses noch versiegelt werden, beispielsweise durch Auftragen eines Lackes.

Das oben aufgeführte technische Problem wird auch durch eine Vorrichtung gelöst, bei der mindestens auf einer Seite des mindestens einen Druckkopfes ein Entionisierungsmittel, insbesondere in Form eines Entionisierungsstabes oder eines Entionisierungsgebläses angeordnet ist. Bei dem entsprechenden Verfahren wird der Schritt ausgeführt, bei dem das Kantenband in Druckrichtung vor dem Aufdrucken entionisiert wird. Dadurch wird bei jedem Hub während des Druckvorgangs das zu bedruckende Kantenband entionisiert. Der Entionisierungsstab oder das Entionisierungsgebläse ist beabstandet zum Kantenband kontaktlos angeordnet und bringt in bekannter Weise Ionen auf die Oberfläche auf. Somit erfolgt das Entionisieren außerhalb des Druckbereichs in Druckrichtung vor dem mindestens einen Druckkopf.

Die beschriebene Druck-Vorrichtung kann in verschiedenen Anordnungen eingesetzt werden. Zum einen kann die Vorrichtung in einem Inline-Herstellungsprozess im Nachgang an eine Extrusion bzw. Koextrusion zum Erzeugen des Kantenbandes, einer Kalanderanordnung zum Festigen, Einpressen von Oberflächenstrukturen und ggf. Aufdrucken einer oder mehrerer Farbschichten zum Aufbau eines Dekorgrundes eingesetzt werden. In diesem Fall muss der kontinuierliche Nachschub an Bandkantenmaterial durch eine Pufferanordnung, beispielsweise durch eine Tänzeranordnung zwischengespeichert werden, um einen getakteten Vorschub innerhalb der Druck-Vorrichtung realisieren zu können.

Dieselbe Anordnung kann bei einem kontinuierlichen Abwickelprozess eines vorgefertigten und auf einer Rolle aufbewahrten Bandkantenmaterials angewendet werden. Auch hierbei ist eine Zwischenspeicherung notwendig.

Zum anderen kann die Druck-Vorrichtung in einer Anordnung mit einer getakteten Abwicklung von Bandkantenmaterial von einer Rolle eingesetzt werden, wobei dann keine Zwischenspeicherung zwischen Rolle und Druck-Vorrichtung notwendig ist und die Taktung von Abrollen und Einführen in den Druckbereich synchronisiert werden kann.

Mit dem zuvor beschriebenen Verfahren bzw. mit der zuvor beschriebenen Vorrichtung können - wie beschrieben - farbige Druckbilder erzeugt werden, die auf bereits strukturierte Kantenbänder aufgedruckt werden. Die beschriebene Druckvorrichtung kann jedoch selbst auch zum Erzeugen einer Oberflächenstruktur eingesetzt werden. Dazu wird, bevorzugt in einer Mehrzahl von Hüben mit einer einfarbigen, insbesondere weißen Tinte eine 3D-Oberflächenstruktur erzeugt, die anschließend in weiteren Hüben der gleichen Druckvorrichtung oder einer weiteren Druckvorrichtung farbig dekoriert wird. Diese Form der Strukturgebung kann daher auch als 3D-Druck verstanden werden.

Das zuvor beschriebene Verfahren kann dadurch erweitert werden, dass das mit einem Dekor bedruckte Kantenband, insbesondere unmittelbar im selben Prozess durch mindestens eine sich anschließende Lackierung weiter veredelt wird. Die Lackierung kann auch später, insbesondere nach einem Aufrollen erfolgen.

Im Folgenden wird die Erfindung anhand von Ausführungsbeispielen mit Bezug auf die Zeichnung erläutert. In der Zeichnung zeigen
- Fig. 1: eine erfindungsgemäße Vorrichtung in einer schematischen Vorderansicht,
- Fig. 2: einen Druckkopf in einer vergrößerten schematischen Seitenansicht und
- Fig. 3: eine Anordnung von Druckköpfen in einer schematischen Draufsicht.

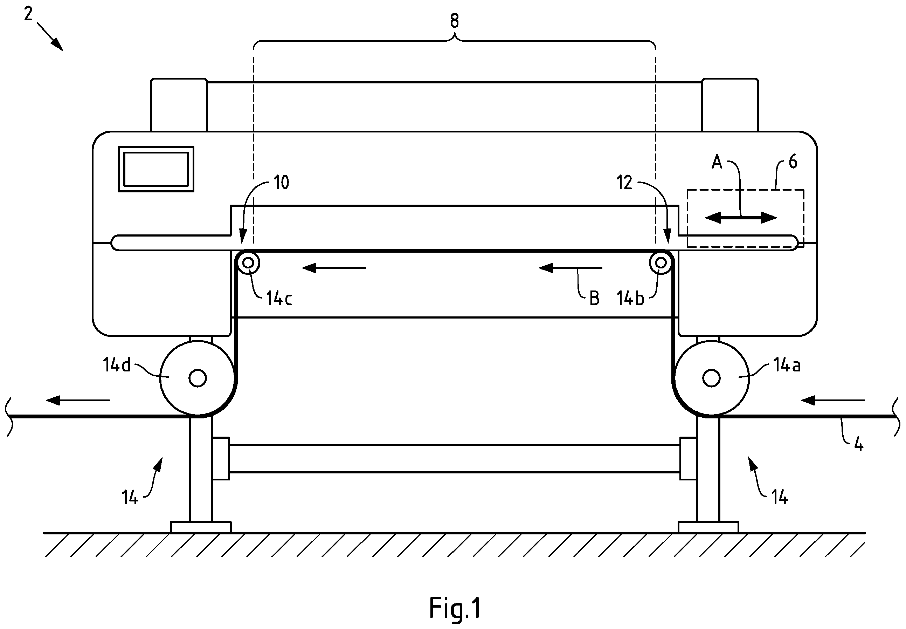

Die in Fig. 1 gezeigte erfindungsgemäße Vorrichtung 2 zum Bedrucken von Kantenbändern 4 weist zunächst einen Druckkopf 6 zum Erzeugen eines Druckbildes auf dem Kantenband 4 auf. Die dargestellte Druck-Vorrichtung 2 kann aus einer industriellen Digitaldruckmaschine mit einem Tintenstrahl-Druckkopf bestehen, der in der seitlichen Ansicht in Fig. 1 von rechts nach links bzw. links nach rechts bewegt werden kann.

Der Druckkopf 6 ist für einen Multi-Pass-Druckvorgang geeignet, wobei gleichzeitig alle vier CYMK-Farben eines Farbsystems aufgebracht werden. Für die vier CYMK-Farben ist damit mindestens nur ein Hub, also eine komplette Hin- oder Herbewegung der Druckkopfeinheit notwendig.

Zur Steigerung der Druckbildauflösung ist es ebenso möglich, das Druckbild gezielt durch mindestens eine komplette Hin- und Herbewegung der Druckkopfeinheit, also durch zwei Hübe, zu erzeugen. Diese Art der Druckbilderzeugung wird in der Technik als "bidirektionaler Druckmodus" bezeichnet.

Optional ist es möglich, die üblicherweise verwendete Anzahl der hier genannten vier Tinten CMYC, also Cyan, Magenta, Yellow, Black um weitere Farben, z.B. Light-Farben zu ergänzen. Auch sind Grün, Blau, Rot oder Orange oder Mischfarben wie Beige, Hellbraun, Mittelgrau denkbar. Die beschriebene Erfindung beschränkt sich daher nicht auf die Verwendung der vier Farben CMYK. Viele andere Farben sind optional einsetzbar. Dadurch kann der darstellbare Farbraum den Erfordernissen der Farbgestaltung angepasst werden. Für die Anwendung von weiteren Farben können die Druckkopfeinheiten des Druckers um weitere Druckköpfe erweitert werden, oder es werden separate Druckkopfeinheiten eingesetzt.

Die Druck-Vorrichtung weist einen Linearantrieb zum Bewegen des Druckkopfes 6 in einer Druckrichtung A innerhalb eines Druckbereichs 8 zwischen zwei Endpositionen 10 und 12 auf. Der Linearantrieb ermöglicht eine sehr genaue Bewegung des Druckkopfes 6 und ermöglicht eine Herstellung eines detaillierten und ggf. mit einer Oberflächenstruktur synchronisierten Druckbildes.

Des Weiteren ist eine Zuführeinrichtung 14 zum Zuführen des Kantenbandes 4 in den Druckbereich 8 entlang einer Transportrichtung B vorgesehen, wobei im vorliegenden Beispiel vier Transportrollen 14a bis 14d vorgesehen sind, die zumindest teilweise mittels einer nicht dargestellten Antriebseinheit angetrieben werden. Weiterhin ist eine ebenfalls nicht dargestellte Steuereinrichtung zum Steuern des Druckkopfes 4, des Linearantriebes und der Zuführeinrichtung 14 vorgesehen.

Erfindungsgemäß ist die Vorrichtung derart ausgestaltet, dass die Transportrichtung B des Kantenbandes im Wesentlichen parallel zur Druckrichtung A ausgerichtet ist. In Fig. 1 sind die beiden Richtungen mit parallelen Pfeilen dargestellt, wobei im Wesentlichen parallel bedeutet, dass bei Einzelbewegungen eine kleine Abweichungen von der Parallelität auftreten kann, dass jedoch grundsätzlich die Transportrichtung und die Druckrichtung zusammenfallen.

Weiterhin ist die Steuereinrichtung eingerichtet, mittels der Zuführeinrichtung 14 das Kantenband 4 im Taktmodus in den Druckbereich 8 zuzuführen und zu positionieren und die Steuereinrichtung ist eingerichtet, mittels des Linearantriebs den Druckkopf 6 zu bewegen und für einen Druckvorgang zum Bedrucken des Kantenbands 4 anzusteuern, wenn das Kantenband 4 im Druckbereich positioniert ist.

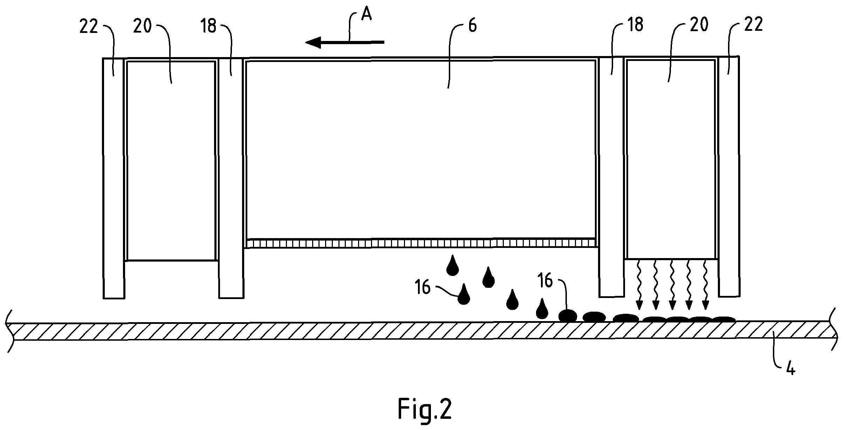

Fig. 2 zeigt einen Druckkopf 6 in einer schematischen Seitenansicht in einer Anordnung oberhalb des Kantenbandes 4. Mit dem Pfeil A ist die Druckrichtung von rechts nach links dargestellt. Die Relativbewegung zwischen dem Druckkopf 6 und dem Kantenband 4 ist auch durch die räumliche Verteilung der Tintentropfen 16 zu erkennen.

Zu beiden Seiten des Druckkopfes 6 sind Blenden 18 und Strahlungsquellen 20 angeordnet, die in diesem Beispiel als UV-Lichtquellen ausgebildet sind und mit ihrer Strahlung die auf dem Kantenband 4 aufgebrachten Tintentropfen 16 aushärten. Die Blenden 18 schirmen dabei den Bereich unterhalb des Druckkopfes 6 ab, so dass die Tintentropfen 16 erst nach dem Aufbringen auf dem Kantenband 4 gehärtet werden.

Des Weiteren sind zu beiden Seiten der Strahlungsquellen 20 sind Entionisierungsstäbe 22 angeordnet, an deren zum Kantenband 4 gerichteten Enden Ionen bzw. Ionenbüschel austreten und für eine Entionisierung des Kantenbandes 4 führen. Da die Entionisierung vor dem Bedrucken durch den Druckkopf 6 stattfindet, ist in Druckrichtung A (Fig. 2) der linke Entionisierungsstab 22 aktiv, während die rechte Strahlungsquelle 20 im Nachgang zum Druckvorgang aktiv ist.

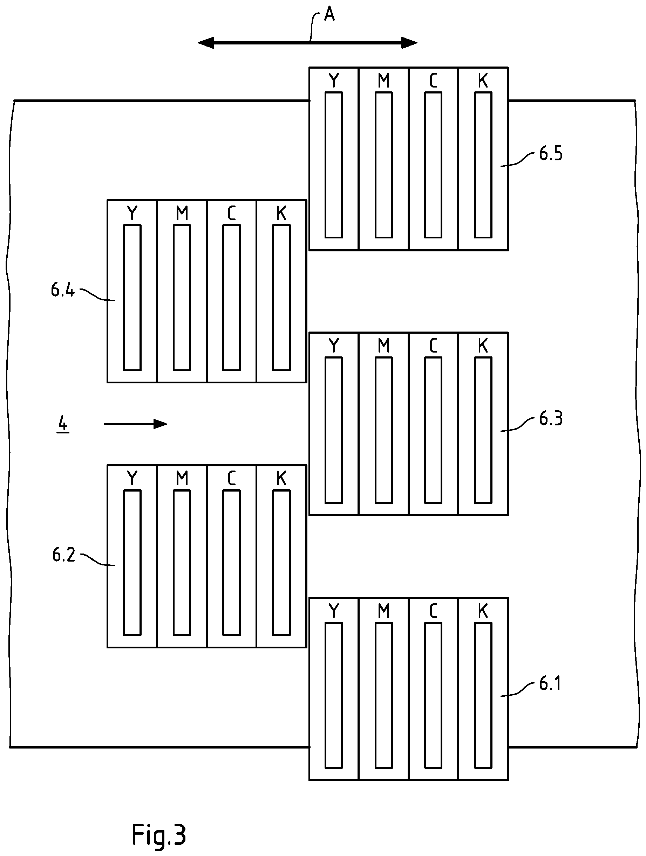

Fig. 3 zeigt des Weiteren eine Draufsicht auf eine Anordnung von mehreren Druckköpfen 6.1 bis 6.5, die versetzt zueinander und in Druckrichtung A überlappend in zwei Reihen angeordnet sind. Innerhalb jedes der Druckköpfe 6.1 bis 6.5 sind Linien eingezeichnet, die von links nach rechts mit den Buchstaben Y, M, C und K für die vier Grundfarben des CYMK-Drucks Cyan, Yellow, Magenta und Schwarz (Key) gekennzeichnet sind. Beim Verfahren der Druckköpfe 6.1 bis 6.5 entlang des Kantenbandes 4 kann somit ein geschlossenes Druckbild erzeugt werden.

## Patentansprüche

1. Verwendung einer Vorrichtung (2) zum Bedrucken von Kantenbändern (4),
- mit mindestens einem Druckkopf (6) zum Erzeugen eines Druckbildes auf dem Kantenband (4),
- mit einem Linearantrieb zum Bewegen des mindestens einen Druckkopfes (6) in einer Druckrichtung (A) innerhalb eines Druckbereichs (8) zwischen zwei Endpositionen (10, 12),
- mit einer Zuführeinrichtung (14, 14a-14d) zum Zuführen des Kantenbands (4) in den Druckbereich (8) entlang einer Transportrichtung (B) und
- mit einer Steuereinrichtung zum Steuern des mindestens einen Druckkopfes (6), des Linearantriebes und der Zuführeinrichtung (14),
- wobei die Transportrichtung (B) des Kantenbands (4) im Wesentlichen parallel zur Druckrichtung (A) ausgerichtet ist.

2. Verwendung einer Vorrichtung nach Anspruch 1,
**dadurch gekennzeichnet,**
- **dass** die Steuereinrichtung eingerichtet ist, mittels der Zuführeinrichtung (14) das Kantenband (4) im Taktmodus in den Druckbereich (8) zuzuführen und zu positionieren und
- **dass** die Steuereinrichtung eingerichtet ist, mittels des Linearantriebs den mindestens einen Druckkopf (6) zu bewegen und für einen Druckvorgang zum Bedrucken des Kantenbands (4) anzusteuern.

3. Verwendung einer Vorrichtung nach Anspruch 1 oder 2,
**dadurch gekennzeichnet,**
**dass** eine Saugtischfunktion zum Positionieren des Kantenbands (4) zumindest abschnittsweise im Druckbereich (8) integriert ist.

4. Verwendung einer Vorrichtung nach einem der Ansprüche 1 bis 3,
**dadurch gekennzeichnet,**
**dass** zumindest auf einer Seite, bevorzugt auf beiden Seiten des mindestens einen Druckkopfes (6) in Druckrichtung mindestens eine Aushärtungsquelle, vorzugsweise eine Strahlungsquelle (20), insbesondere eine LED und - oder UV-Lichtquelle, oder vorzugsweise einer Warmluftquelle zum Aushärten der Druckfarbe vorgesehen ist.

5. Verwendung einer Vorrichtung nach einem der Ansprüche 1 bis 4,
**dadurch gekennzeichnet,**
**dass** mindestens auf einer Seite des mindestens einen Druckkopfes (6) ein Entionisierungsmittel, insbesondere in Form eines Entionisierungsstab oder eines Entionisierungsgebläses angeordnet ist.

6. Verfahren zum Bedrucken von Kantenbändern,
- bei dem mit mindestens einem Druckkopf (6) ein Druckbild auf dem Kantenband (4) erzeugt wird,
- bei dem mit einem Linearantrieb der mindestens eine Druckkopf (6) in einer Druckrichtung (A) innerhalb eines Druckbereichs (8) zwischen zwei Endpositionen (10, 12) bewegt wird,
- bei dem mit einer Zuführeinrichtung (14, 14a-14d) das Kantenband (4) in den Druckbereich (8) entlang einer Transportrichtung (B) zugeführt wird und
- bei dem mit einer Steuereinrichtung der mindestens eine Druckkopfes (6), der Linearantrieb und die Zuführeinrichtung (14) gesteuert werden,
- bei dem der mindestens eine Druckkopf (6) während des Druckvorganges in einer Druckrichtung (A) innerhalb eines Druckbereichs (8) zwischen zwei Endpositionen (10, 12) bewegt wird,
- bei dem das Kantenband (4) in den Druckbereich (8) entlang einer Transportrichtung (B) zugeführt wird, die im Wesentlichen parallel zur Druckrichtung verläuft.

7. Verfahren nach Anspruch 6,
- bei dem das Kantenband (4) im Taktmodus in den Druckbereich (8) zugeführt und positioniert wird und
- bei dem der mindestens eine Druckkopf (6) bewegt und für einen Druckvorgang zum Bedrucken des Kantenbands (4) angesteuert wird.

8. Verfahren nach Anspruch 6 oder 7,
bei dem das Kantenband (4) zwischen zwei Druckvorgängen zugeführt und ein neuer Abschnitt des Kantenbands (4) positioniert wird.

9. Verfahren nach einem der Ansprüche 6 bis 8,
bei dem der mindestens eine Druckkopf (6) für einen Druckvorgang zwischen den Endpositionen (10, 12) hin- und herbewegt wird oder von einer Endposition (10, 12) zur anderen Endposition (12, 10) bewegt wird.

10. Verfahren nach einem der Ansprüche 6 bis 9,
bei dem die Druckfarbe während des Druckvorgangs in Druckrichtung (A) hinter dem Aufdrucken, insbesondere mittels UV-Licht ausgehärtet wird.

11. Verfahren nach einem der Ansprüche 6 bis 10,
bei dem das Kantenband (4) in Druckrichtung (A) vor dem Aufdrucken entionisiert wird.

12. Verfahren nach einem der Ansprüche 6 bis 11,
bei dem das Kantenband (4) mittels einer eingangsseitigen Tänzeranordnung und/oder mit einer ausgangsseitigen Tänzeranordnung zwischengespeichert wird.

13. Vorrichtung zum Bedrucken von Kantenbändern (4)
- mit mindestens einem Druckkopf (6) zum Erzeugen eines Druckbildes auf dem Kantenband (4),
- mit einem Linearantrieb zum Bewegen des mindestens einen Druckkopfes (6) in einer Druckrichtung (A) innerhalb eines Druckbereichs (8) zwischen zwei Endpositionen (10, 12),
- mit einer Zuführeinrichtung (14, 14a-14d) zum Zuführen des Kantenbands (4) in den Druckbereich (8) entlang einer Transportrichtung (B) und
- mit einer Steuereinrichtung zum Steuern des mindestens einen Druckkopfes (6), des Linearantriebes und der Zuführeinrichtung (14),
- wobei die Transportrichtung (B) des Kantenbands (4) im Wesentlichen parallel zur Druckrichtung (A) ausgerichtet ist.
**dadurch gekennzeichnet,**
- **dass** mindestens auf einer Seite des mindestens einen Druckkopfes (6) ein Entionisierungsmittel, insbesondere in Form eines Entionisierungsstab oder eines Entionisierungsgebläses angeordnet ist.

14. Vorrichtung nach Anspruch 13,
**dadurch gekennzeichnet,**
- **dass** die Steuereinrichtung eingerichtet ist, mittels der Zuführeinrichtung (14) das Kantenband (4) im Taktmodus in den Druckbereich (8) zuzuführen und zu positionieren und
- **dass** die Steuereinrichtung eingerichtet ist, mittels des Linearantriebs den mindestens einen Druckkopf (6) zu bewegen und für einen Druckvorgang zum Bedrucken des Kantenbands (4) anzusteuern.

15. Vorrichtung nach Anspruch 13 oder 14,
**dadurch gekennzeichnet,**
**dass** eine Saugtischfunktion zum Positionieren des Kantenbands (4) zumindest abschnittsweise im Druckbereich (8) integriert ist.

16. Vorrichtung nach einem der Ansprüche 13 bis 15,
**dadurch gekennzeichnet,**
**dass** zumindest auf einer Seite, bevorzugt auf beiden Seiten des mindestens einen Druckkopfes (6) in Druckrichtung mindestens eine Aushärtungsquelle, vorzugsweise eine Strahlungsquelle (20), insbesondere eine LED und - oder UV-Lichtquelle, oder vorzugsweise einer Warmluftquelle zum Aushärten der Druckfarbe vorgesehen ist.

## Claims

1. Use of a device (2) for printing edge bands (4),
- with at least one print head (6) for producing a print image on the edge band (4),
- having a linear drive for moving the at least one print head (6) in a printing direction (A) within a printing area (8) between two end positions (10, 12)
- with a feed device (14, 14a-14d) for feeding the edge band (4) into the printing area (8) along a transport direction (B) and
- with a control device for controlling the at least one print head (6), the linear drive and the feed device (14),
- wherein the transport direction (B) of the edge band (4) is aligned substantially parallel to the printing direction (A).

2. Use of a device according to claim 1,
**characterized in**
- **in that** the control device is set up to feed and position the edge band (4) into the printing area (8) in cycle mode by means of the feed device (14), and
- **in that** the control device is set up to move the at least one print head (6) by means of the linear drive and to control it for a printing operation for printing the edge band (4).

3. Use of a device according to claim 1 or 2,
**characterized in**
**in that** a suction table function for positioning the edge band (4) is integrated at least in sections in the printing area (8).

4. Use of a device according to one of claims 1 to 3,
**characterized in**
**in that** at least one curing source, preferably a radiation source (20), in particular an LED and - or UV light source, or preferably a hot air source for curing the printing ink is provided at least on one side, preferably on both sides, of the at least one printing head (6) in the printing direction.

5. Use of a device according to one of claims 1 to 4,
**characterized in**
**in that** a deionisation means, in particular in the form of a deionisation bar or a deionisation blower, is arranged at least on one side of the at least one print head (6).

6. Method for printing edge bands,
- in which a print image is produced on the edge band (4) with at least one print head (6),
- in which the at least one print head (6) is moved in a printing direction (A) within a printing area (8) between two end positions (10, 12) by means of a linear drive,
- in which the edge band (4) is fed into the printing area (8) along a transport direction (B) by a feed device (14, 14a-14d), and
- in which the at least one print head (6), the linear drive and the feed device (14) are controlled by a control device,
- in which the at least one print head (6) is moved during the printing process in a printing direction (A) within a printing area (8) between two end positions (10, 12),
- in which the edge band (4) is fed into the printing region (8) along a transport direction (B) which is substantially parallel to the printing direction.

7. Method according to claim 6,
- in which the edge band (4) is fed into the printing area (8) and positioned in clock mode, and
- in which the at least one print head (6) is moved and controlled for a printing operation for printing the edge band (4).

8. Method according to claim 6 or 7,
wherein the edge band (4) is fed and a new section of the edge band (4) is positioned between two printing operations.

9. Method according to any one of claims 6 to 8,
in which the at least one print head (6) is moved back and forth between the end positions (10, 12) for a printing operation or is moved from one end position (10, 12) to the other end position (12, 10).

10. Method according to any one of claims 6 to 9,
in which the printing ink is cured during the printing process in the printing direction (A) after the printing, in particular by means of UV light.

11. Process according to one of the claims 6 to 10,
in which the edge band (4) is deionised in the printing direction (A) before printing.

12. Process according to any one of claims 6 to 11,
in which the edge band (4) is temporarily stored by means of an input-side dancer arrangement and/or with an output-side dancer arrangement.

13. Device for printing edge bands (4)
- with at least one print head (6) for producing a print image on the edge band (4),
- with a linear drive for moving the at least one print head (6) in a printing direction (A) within a printing area (8) between two end positions (10, 12),
- with a feed device (14, 14a-14d) for feeding the edge band (4) into the printing area (8) along a transport direction (B) and
- with a control device for controlling the at least one print head (6), the linear drive and the feed device (14),
- wherein the transport direction (B) of the edge band (4) is aligned substantially parallel to the printing direction (A).
**characterized in**
- **in that** a deionisation means, in particular in the form of a deionisation bar or a deionisation blower, is arranged at least on one side of the at least one print head (6).

14. Device according to claim 13,
**characterized in**
- **in that** the control device is set up to feed and position the edge band (4) into the printing area (8) in cycle mode by means of the feed device (14), and
- **in that** the control device is set up to move the at least one print head (6) by means of the linear drive and to control it for a printing operation for printing the edge band (4).

15. Device according to claim 13 or 14,
**characterized in**
**that** a suction table function for positioning the edge band (4) is integrated at least in sections in the printing area (8).

16. Device according to one of the claims 13 to 15,
**characterized in**
**in that** at least one curing source, preferably a radiation source (20), in particular an LED and - or UV light source, or preferably a hot air source for curing the printing ink is provided at least on one side, preferably on both sides, of the at least one print head (6) in the printing direction.

## Revendications

1. Utilisation d'un dispositif (2) pour imprimer des bandes de chant (4),
- avec au moins une tête d'impression (6) pour produire une image d'impression sur la bande de chant (4),
- avec un entraînement linéaire pour déplacer l'au moins une tête d'impression (6) dans une direction d'impression (A) à l'intérieur d'une zone d'impression (8) entre deux positions d'extrémité (10, 12),
- avec un dispositif d'amenée (14, 14a-14d) pour amener la bande de chant (4) dans la zone d'impression (8) le long d'une direction de transport (B) et
- avec un dispositif de commande pour commander l'au moins une tête d'impression (6), l'entraînement linéaire et le dispositif d'amenée (14),
- la direction de transport (B) de la bande de chant (4) étant orientée essentiellement parallèlement à la direction d'impression (A).

2. Utilisation d'un dispositif selon la revendication 1,
**caractérisée**
- **en ce que** le dispositif de commande est configuré-pour, au moyen du dispositif d'amenée (14), amener et positionner la bande de chant (4) dans la zone d'impression (8) en mode cadencé et
- **en ce que** le dispositif de commande est configuré pour déplacer, au moyen de l'entraînement linéaire, l'au moins une tête d'impression (6) et la commander pour une opération d'impression pour imprimer la bande de chant (4).

3. Utilisation d'un dispositif selon la revendication 1 ou 2,
**caractérisée**
**en ce qu'**une fonction de table aspirante pour positionner la bande de chant (4) est intégrée au moins par sections dans la zone d'impression (8).

4. Utilisation d'un dispositif selon l'une des revendications 1 à 3,
**caractérisée**
**en ce qu'**au moins sur un côté, de préférence sur les deux côtés de l'au moins une tête d'impression (6) dans la direction d'impression, au moins une source de durcissement, de préférence une source de rayonnement (20), en particulier une source de lumière LED et / ou UV, ou de préférence une source d'air chaud est prévue pour durcir l'encre d'impression.

5. Utilisation d'un dispositif selon l'une des revendications 1 à 4,
**caractérisée**
**en ce qu'**au moins sur un côté de l'au moins une tête d'impression (6) est disposé un moyen de déionisation, en particulier sous la forme d'une barre de déionisation ou d'une soufflante de déionisation.

6. Procédé pour imprimer des bandes de chant,
- dans lequel, avec au moins une tête d'impression (6), une image d'impression est produite sur la bande de chant (4),
- dans lequel, avec un entraînement linéaire, l'au moins une tête d'impression (6) est déplacée dans une direction d'impression (A) à l'intérieur d'une zone d'impression (8) entre deux positions d'extrémité (10, 12),
- dans lequel, avec un dispositif d'amenée (14, 14a-14d), la bande de chant (4) est amenée dans la zone d'impression (8) le long d'une direction de transport (B) et
- dans lequel l'au moins une tête d'impression (6), l'entraînement linéaire et le dispositif d'amenée (14) sont commandés avec un dispositif de commande,
- dans lequel l'au moins une tête d'impression (6) est déplacée pendant l'opération d'impression dans une direction d'impression (A) à l'intérieur d'une zone d'impression (8) entre deux positions d'extrémité (10, 12),
- dans lequel la bande de chant (4) est amenée dans la zone d'impression (8) le long d'une direction de transport (B) qui s'étend essentiellement parallèlement à la direction d'impression.

7. Procédé selon la revendication 6,
- dans lequel la bande de chant (4) est amenée et positionnée dans la zone d'impression (8) en mode cadencé, et
- dans lequel l'au moins une tête d'impression (6) est déplacée et commandée pour une opération d'impression pour imprimer la bande de chant (4).

8. Procédé selon la revendication 6 ou 7,
dans lequel la bande de chant (4) est amenée entre deux opérations d'impression et une nouvelle section de la bande de chant (4) est positionnée.

9. Procédé selon l'une des revendications 6 à 8,
dans lequel l'au moins une tête d'impression (6) est déplacée en va-et-vient entre les positions d'extrémité (10, 12) pour une opération d'impression ou est déplacée d'une position d'extrémité (10, 12) à l'autre position d'extrémité (12, 10).

10. Procédé selon l'une des revendications 6 à 9,
dans lequel l'encre d'impression est durcie pendant l'opération d'impression dans la direction d'impression (A) en aval de l'impression, en particulier au moyen d'une lumière UV.

11. Procédé selon l'une des revendications 6 à 10,
dans lequel la bande de chant (4) est déionisée dans la direction d'impression (A) avant l'impression.

12. Procédé selon l'une des revendications 6 à 11,
dans lequel la bande de chant (4) est stockée temporairement au moyen d'un agencement de danseur côté entrée et/ou avec un agencement de danseur côté sortie.

13. Dispositif pour l'impression des bandes de chant (4)
- avec au moins une tête d'impression (6) pour produire une image d'impression sur la bande de chant (4),
- avec un entraînement linéaire pour déplacer l'au moins une tête d'impression (6) dans une direction d'impression (A) à l'intérieur d'une zone d'impression (8) entre deux positions d'extrémité (10, 12),
- avec un dispositif d'amenée (14, 14a-14d) pour amener la bande de chant (4) dans la zone d'impression (8) le long d'une direction de transport (B) et
- avec un dispositif de commande pour commander l'au moins une tête d'impression (6), l'entraînement linéaire et le dispositif d'amenée (14),
- la direction de transport (B) de la bande de chant (4) étant orientée essentiellement parallèlement à la direction d'impression (A),
**caractérisé**
- **en ce qu'**un moyen de déionisation, en particulier sous la forme d'une barre de déionisation ou d'une soufflante de déionisation, est disposé au moins sur un côté de l'au moins une tête d'impression (6).

14. Dispositif selon la revendication 13,
**caractérisé**
- **en ce que** le dispositif de commande est configuré pour amener et positionner la bande de chant (4) dans la zone d'impression (8) au moyen du dispositif d'amenée (14) en mode cadencé, et
- **en ce que** le dispositif de commande est configuré pour déplacer, au moyen de l'entraînement linéaire, l'au moins une tête d'impression (6) et la commander pour une opération d'impression pour imprimer la bande de chant (4).

15. Dispositif selon la revendication 13 ou 14,
**caractérisé**
**en ce qu'**une fonction de table aspirante pour positionner la bande de chant (4) est intégrée au moins par sections dans la zone d'impression (8).

16. Dispositif selon l'une des revendications 13 à 15,
**caractérisé**
**en ce qu'**au moins sur un côté, de préférence sur les deux côtés de l'au moins une tête d'impression (6) dans la direction d'impression, au moins une source de durcissement, de préférence une source de rayonnement (20), en particulier une source de lumière LED et / ou UV, ou de préférence une source d'air chaud est prévue pour durcir l'encre d'impression.
